# EUROPÄISCHE PATENTANMELDUNG

(11) **EP 1 921 838 A2**
(43) Veröffentlichungstag der Anmeldung: **14.05.2008**
(21) Anmeldenummer: 07120531.4
(22) Anmeldetag: 13.11.2007
(51) Int. Cl.: H04N 1/195

(54) **Lesegerät**

(30) Priorität: 13.11.2006 DE 102006053652
(71) Anmelder: Baum, Wolfgang, 69257 Wiesenbach (DE)
(72) Erfinder: Baum, Wolfgang, 69257 Wiesenbach (DE)
(74) Vertreter: Sommer, Peter

(57) **Zusammenfassung**

Die Erfindung betrifft ein Lesegerät, umfassend einen Lesetisch (1) und eine in einem Abstand zu dem Lesetisch (1) angeordnete Bilderfassungseinheit (11) und eine Anzeigeeinheit (17), wobei die Bilderfassungseinheit (11) über ein mit dem Lesetisch (1) verbundenen Rahmen (3) in ihrer Höhe über dem Lesetisch (1) positionierbar ist und wobei an dem Rahmen (3) die Anzeigeeinheit (17) höhenverstellbar befestigt ist. Der Rahmen (3) ist über eine Scharnierverbindung (28, 29) gegenüber dem Lesetisch (1) verschwenkbar und die Anzeigeeinheit (17) ist über eine Schwenkvorrichtung (18, 27) gegenüber dem Rahmen (3) verschwenkbar und die Bilderfassungseinheit (11) ist ebenfalls gegenüber dem Rahmen (3) schwenkbar.

## Beschreibung

### Technisches Gebiet

Die Erfindung betrifft ein Lesegerät für Sehbehinderte Menschen, um diese trotz ihrer Sehbehinderung in die Lage zu versetzen, Bilder oder Text zu erfassen und gegebenenfalls Formulare auszufüllen. Dies geschieht dadurch, dass das Bild oder der Text in vergrößerter Darstellung wiedergegeben wird.

### Stand der Technik

Aus der DE 199 52 393 A1 ist ein Lesegerät bekannt, das einen Lesetisch und eine in einem Abstand zu dem Lesetisch angeordnete Bilderfassungseinheit umfasst, wobei die Bilderfassungseinheit in einem im Wesentlichen konstanten Abstand über den Lesetisch bewegbar ist. Die Bilderfassungseinheit ist in einem Kopfteil angeordnet und ist über Steuerleitungen mit einem Steuergerät verbunden. Im Bereich des Kopfteils ist ein Bildschirm angeordnet, der gegenüber dem Kopfteil höhenverstellbar ist und über eine Teleskopführung auch tiefenverstellbar sein kann. Der Bildschirm ist gegenüber dem Kopfteil über ein Drehgelenk bezüglich seiner Winkellage ausrichtbar. Dabei kann der Bildschirm als Flachbildschirm ausgeführt sein.

Obwohl dieses Lesegerät eine große Hilfe für Sehbehinderte Menschen ist, besteht der Nachteil, dass es schwer zu transportieren ist auf Grund des starren Aufbaus.

Die Aufgabe der Erfindung besteht darin, ein Lesegerät bereit zu stellen, welches transportabel ist und bedarfsweise aufgebaut werden kann.

### Darstellung der Erfindung

Die Aufgabe wird gelöst mit einem Lesegerät, umfassend einen Lesetisch und eine in einem Abstand zu dem Lesetisch angeordnete Bilderfassungseinheit und eine Anzeigeeinheit, wobei die Kamera über einen mit dem Lesetisch verbundenen Rahmen in ihrer Höhe über dem Lesetisch positionierbar ist und wobei die Anzeigeeinheit an dem Rahmen höhenverstellbar befestigt ist. Der Rahmen ist über eine Scharnierverbindung gegenüber dem Lesetisch verschwenkbar und die Anzeigeeinheit ist über eine Schwenkvorrichtung gegenüber dem Rahmen verschwenkbar. Die Bilderfassungseinheit ist ebenfalls gegenüber dem Rahmen schwenkbar.

Vorteilhafterweise liegen die Schwenkachsen für den Rahmen und den Träger sowie für die Schwenkvorrichtung in der Ebene des Rahmens.

Die Bilderfassungseinheit kann ein schwenkbares Trägerteil aufweisen, das mit dem Rahmen schwenkbar verbunden ist, und die Kamera kann an einem mit dem Trägerteil verbundenen auslenkbaren Ausleger angeordnet sein.

Besonders vorteilhaft ist es, wenn der Träger der Bilderfassungseinheit in eine Ebene im Wesentlichen senkrecht zum Lesetisch schwenkbar ist und wenn die Kamera zusammen mit dem Träger in diese Ebene verschwenkbar ist. Hierdurch sind Aufnahmen von einer Tafel möglich, die vergrößert auf der Anzeige dargestellt werden können.

### Kurzbeschreibung der Zeichnungen

In der Zeichnung ist ein Ausführungsbeispiel der Erfindung dargestellt. Es zeigt:
- Fig. 1: ein erfindungsgemäßes Lesegerät in perspektivischer Ansicht, die
- Fig. 2: das Lesegerät aus Fig. 1 in einer alternativen Ausrichtung der Bilderfassungseinheit.
- Fig. 3: das Lesegerät in einem zusammengefalteten Zustand.

### Ausführungsbeispiel der Erfindung

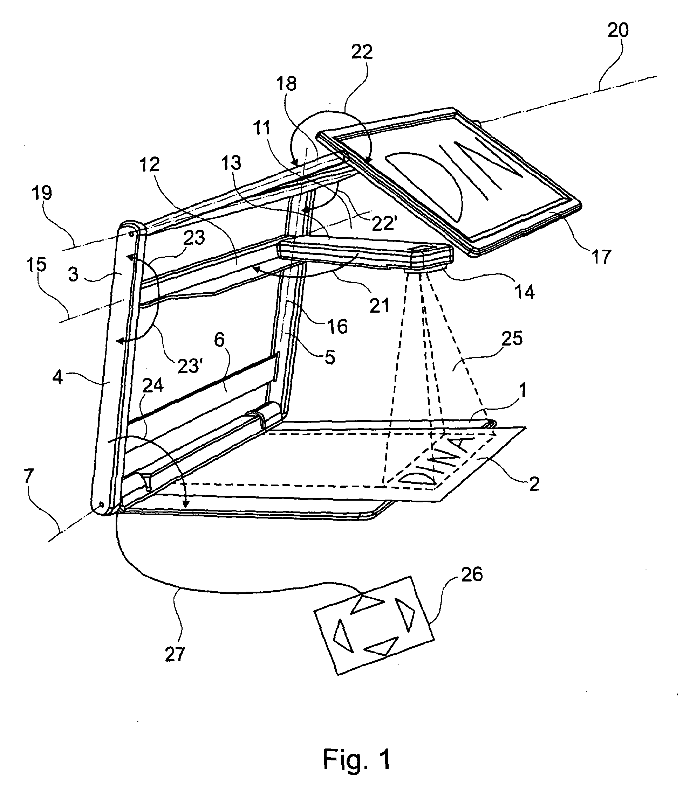

Das in Fig. 1 dargestellte Lesegerät umfasst einen Lesetisch 1, auf welchem eine zulesende Vorlage 2 zumindest teilweise aufgelegt ist. Der Lesetisch 1 ist an seinem vom Betrachter abgewandten Ende mit einem Rahmen 3 mittels eines Scharniergelenks verbunden, so dass der Lesetisch 1 auf den Rahmen 3 hin verschwenkbar ist.

Der Rahmen 3 besteht aus 2 Holmen 4, 5 mit einem Verstrebungsteil 6, welches sich in etwa parallel zu einer Schwenkachse 7 erstreckt. Zwischen den Holmen 4, 5 ist in einem vorgegebenen Abstand zum Lesetisch 1 eine Bilderfassungseinheit 11 angeordnet, die aus einem gegenüber dem Rahmen 3 verschwenkbaren Trägerteil 12, einem an dem Trägerteil 12 angeordneten Ausleger 13 und der eigentlichen Kamera 14 mit einer Vergrößerungsoptik besteht. Die Kamera 14 ist mittels des Auslegers 13 gegenüber dem Träger 12 um eine Schwenkachse 16 verschwenkbar, die senkrecht auf der Schwenkachse 15 des Trägers zum Rahmen 3 steht. Dadurch kann die Kamera 14 oberhalb des Lesetisches 1 in einer Entfernung zum Rahmen 3 positioniert und zu dem Lesetisch 1 ausgerichtet werden.

Die Anzeigeeinheit umfasst einen Flachbildschirm 17, der über ein Rahmenteil 18 mit dem Rahmen 3 verbunden ist. Das Rahmenteil 18 ist um eine innerhalb des Rahmens 3 liegende Schwenkachse 19 gegenüber dem Rahmen 3 verschwenkbar und der Flachbildschirm 17 ist um eine zum Rahmen 3 beabstandete Verschwenkachse 20 gegenüber dem Rahmenteil 18 verschwenkbar.

Beim Zusammenklappen des Lesegeräts wird zunächst die Kamera 14 mit ihrem Ausleger 13 um die Achse 16 zum Träger 12 hin verschwenkt, siehe Pfeil 21. Anschließend wird der Träger 12 so um die Achse 15 gedreht, dass die Kamera zwischen den Holmen 4, 5 liegt, dargestellt durch den Pfeil 23.

Der Flachbildschirm wird in Richtung des Pfeils 24 um die Achse 20 nach oben und hinten gedreht, bis er im Trägerteil 18 liegt und das Trägerteil 18 wird um die Achse 19 so geschwenkt, dass das Rahmenteil 18 innerhalb der Holme 4, 5 des Rahmens 3 zu liegen kommt, dargestellt durch den Pfeil 22'.

Schließlich wird der Rahmen 3 um die Achse 7 auf den Lesetisch zugeschwenkt, bis dieser ebenfalls zwischen den Holmen 4, 5 zu liegen kommt, dargestellt durch den Pfeil 24.

In der in Fig. 1 dargestellten aufgeklappten Stellung des Lesegeräts ist die Kamera 14 auf einen Teil der Vorlage 2 gerichtet, um den dort vorhandenen Text auf der Anzeige 17 in einer Vergrößerung wiederzugeben. Die Ausrichtung der Kamera 14 ist durch einen Lichtfächer 25 dargestellt. Durch Verschieben des auf dem Lesetisch angeordneten Blattes wird der Leseausschnitt verändert. An dem Ausleger 13 kann auch eine Beleuchtungseinheit vorgesehen sein zur zusätzlichen Ausleuchtung der Vorlage 2.

Die Steuerung der Funktionen der Kamera 14 erfolgt über ein externes Steuergerät 26, welches über eine Kabelverbindung, alternativ auch über eine kabellose Verbindung, Befehle an die Kamerasteuerung übermittelt.

Als Funktionen können z.B. Zoom, Falschfarbendarstellung, Kontrast- und Helligkeitseinstellungen und Markierungen bereitgestellt sein.

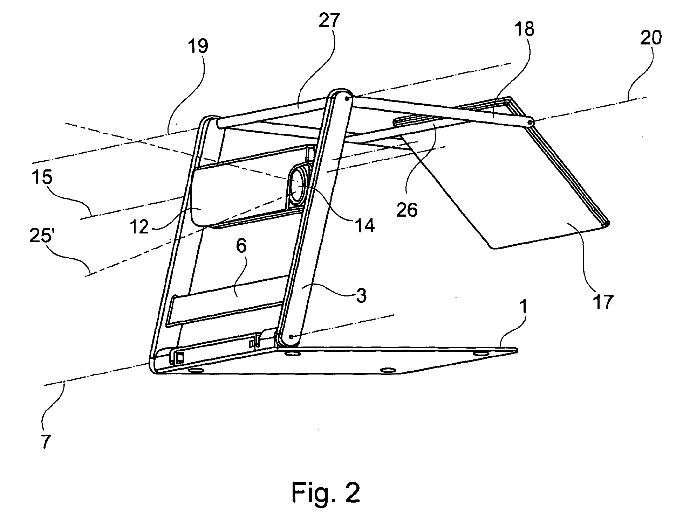

In Fig. 2 ist eine alternative Ausrichtung der Kamera 14 auf einen Bereich vor dem Benutzer ausgerichtet, etwa auf eine Tafel, dargestellt durch den Lichtkegel 25'. Dazu ist die Kamera 14 in dem Träger 12 angeordnet, wobei der Träger 12 um die Achse 15 in Richtung des Pfeils 23' nach hinten, also weiter vom Benutzer weg, verschwenkt wurde. Dem Benutzer zugewandt bleibt die Anzeigeeinheit 17, deren Höhe durch Verstellen um die Achsen 19, 20 einstellbar ist. Die Position des Rahmens 3 bezüglich des Lesetisches 1 hat sich nicht geändert, das heißt, der Rahmen 3 ist bezüglich der Schwenkachse 7 gegenüber dem Lesetisch 1 arretiert.

In dieser Ansicht von schräg hinten und unten wird die Verstrebung 6 und die Konstruktion des Rahmenteils 18 mit einer zusätzlichen Verstrebung 26 und einer Versteifung im Drehgelenk um die Achse 19 in Form einer Strebe 27 deutlich.

Sämtliche Scharniere und Schwenkachsen können stufenlos arretierbar oder in Stufen verstellt werden. Darüber hinaus können Sicherungsmittel vorgesehen sein, um eine erreichte Position zu fixieren und gegen unbeabsichtigtes Verstellen abzusichern.

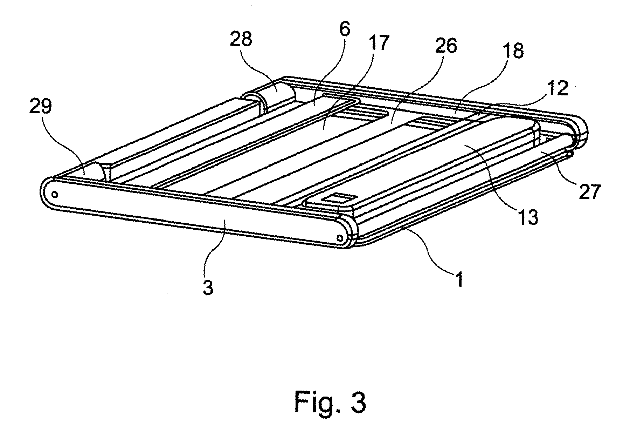

In Fig. 3 ist das Lesegerät in einem zusammengefalteten Zustand gezeigt. Der Lesetisch 1 befindet sich zu unterst und der Rahmen 3 stützt sich auf den Rand des Lesetisches ab.

Der Ausleger 13 wurde durch Drehung um den Pfeil 23 (Fig. 1) in eine nach oben verschwenkte Position gebracht, so dass die Optik der am Ausleger 13 befindlichen Kamera 14 geschützt ist.

Zu erkennen sind die Verstrebungen 6 des Rahmens 3, die Versteifung 26 des die Anzeigeeinheit 17 tragenden Rahmenteils 18 sowie das zweigeteilte Scharnier 28, 29 zur Arretierung des Rahmens gegenüber dem Lesetisch 1.

Insgesamt wird im zusammengefalteten Zustand eine flache kompakte Anordnung erreicht, dank derer ein Transport in einer Aktentasche möglich ist.

## Patentansprüche

1. Lesegerät, umfassend einen Lesetisch (1) und eine in einem Abstand zu dem Lesetisch (1) angeordnete Bilderfassungseinheit (11) und eine Anzeigeeinheit (17), wobei die Bilderfassungseinheit (11) über ein mit dem Lesetisch (1) verbundenen Rahmen (3) in ihrer Höhe über dem Lesetisch (1) positionierbar ist und wobei an dem Rahmen (3) die Anzeigeeinheit (17) höhenverstellbar befestigt ist, **dadurch gekennzeichnet, dass** der Rahmen (3) über ein Scharnierverbindung (28, 29) gegenüber dem Lesetisch (1) verschwenkbar ist, dass die Anzeigeeinheit (17) über eine Schwenkvorrichtung (18, 27) gegenüber dem Rahmen (3) verschwenkbar ist und dass die Bilderfassungseinheit (11) ebenfalls gegenüber dem Rahmen (3) schwenkbar ist.

2. Lesegerät nach Anspruch 1, **dadurch gekennzeichnet, dass** die Schwenkachsen (7, 15, 19) in der Ebene des Rahmens (3) liegen.

3. Lesegerät nach Anspruch 1 oder 2, **dadurch gekennzeichnet, dass** die Bilderfassungseinheit (11) ein schwenkbares Trägerteil (12) aufweist, das mit dem Rahmen (3) schwenkbar verbunden ist, und dass eine Kamera (14) an einem mit dem Trägerteil (12) verbundenen auslenkbaren Ausleger (13) angeordnet ist.

4. Lesegerät nach einem der Ansprüche 1 bis 3, **dadurch gekennzeichnet, dass** der Bildausschnitt (25) der Kamera (14) motorisch verstellbar ist, insbesondere über externe Eingabemittel (26).

5. Lesegerät nach einem der Ansprüche 1 bis 4, **dadurch gekennzeichnet, dass** der Träger (12) der Bilderfassungseinheit (11) in eine Ebene im wesentlichen senkrecht zum Lesetisch (1) schwenkbar ist und dass die Kamera (14) zusammen mit dem Träger (12) in diese Ebene verschwenkbar ist.
